# EUROPEAN PATENT APPLICATION

(11) **EP 4 550 446 A1**
(43) Date of publication of application: **07.05.2025**
(21) Application number: 24186401.6
(22) Date of filing: 04.07.2024
(51) Int. Cl.: H01M 4/13, H01M 10/0525, H01M 10/052, H01M 10/04, H01M 10/0587, H01M 4/02

(54) **ELECTRODE ASSEMBLY AND SECONDARY BATTERY INCLUDING SAME**

(30) Priority: 02.11.2023 KR 20230149978
(71) Applicant: LG Energy Solution, Ltd., Seoul 07335 (KR)
(72) Inventor: PARK, Yu Seon, 07335 Seoul (KR)
(74) Representative: Goddar, Heinz J.

(57) **Abstract**

Disclosed are an electrode assembly and a secondary battery including the same.

## Description

### TECHNICAL FIELD

The present invention relates to an electrode assembly and a secondary battery including the same, and specifically, to an electrode assembly in which core deformation is addressed by changing a design of the electrode assembly, and a cylindrical secondary battery including the electrode assembly.

### BACKGROUND ART

For a cylindrical battery, a jelly-roll type electrode assembly is manufactured by rolling a long electrode having a predetermined width into a roll form. The cylindrical battery manufactured by inserting such an electrode assembly into a battery case undergoes repeated contraction/expansion of an electrode during charging and discharging. In particular, when a tab (in tab) is located in a core of the electrode assembly or a degree of contraction/expansion of the electrode assembly increases due to a silicon-based active material added in a negative electrode, a pressure acting on a core part of the electrode assembly greatly increases.

The core part of the cylindrical battery is a space where a winding core (mandrel) used for winding the electrode assembly is located, and there is an empty space, that is, a core cavity, used in a cylindrical battery assembly process, such as an insertion process of the electrode assembly into the battery case and a welding process.

Recently, as low-resistance/high-capacity designs are increasing, cases where the electrode assembly includes multiple tabs or a silicon-based active material is added are increasing. Accordingly, a possibility of core deformation of the electrode assembly due to the contraction/expansion of the electrode assembly increases. In particular, there are problems that the battery life is deteriorated due to a phenomenon (core collapse) in which the core cavity fails to maintain a circular shape and collapses, and that a negative electrode and a positive electrode come into direct contact to cause an internal short-circuit, leading to heat generation and ignition, due to a phenomenon (core impingement) in which an end portion of the positive electrode located at the core part and the negative electrode adjacent thereto are deformed beyond a certain level, causing damage to a separator between the positive electrode and the negative electrode.

In order to solve the problems of the deterioration in battery life, the damage to the separator and the internal short-circuit due to the deformation of the electrode assembly, it is necessary to develop a technology capable of addressing the phenomenon that the core cavity in the corresponding region fails to maintain a circular shape and collapses, and suppressing the occurrence of internal short-circuit due to the damage to the separator.

### SUMMARY OF THE INVENTION

The present invention is given by the features of the independent claims. Particular embodiments are given by the additional features of the dependent claims.

The present invention has been made in an effort to provide an electrode assembly whose design has been changed to address core deformation and a secondary battery including the electrode assembly.

However, the problem to be solved by the present invention is not limited to the above-described problem, and other problems not described will be apparently understood by one skilled in the art from the following description.

Disclosed is an electrode assembly. The electrode assembly may comprise a first electrode, a separator, and a second electrode that are stacked and wound around a winding axis. The first electrode may have a first surface facing the winding axis and a second surface opposite to the first surface. A flatness fraction of the first electrode may be greater than 3% and 13.5% or less in or at a core part of the electrode assembly. The flatness fraction as used herein may be determined as detailed below.

The terms first electrode and second electrode are used herein in accordance with the relevant technical field of battery designing and manufacturing, in particular in terms of a secondary battery. The first electrode and/or the second electrode may be configured to receive and store charge carriers such as electrons and/or ions (particularly lithium ions). The first electrode and the second electrode may have polarities opposite to each other so that they may receive and release the charge carriers, respectively, during a charging process of the electrode assembly, and vice versa in a discharging process of the electrode assembly. The materials and functionality of the first electrode and the second electrode may be as known in the art unless indicated otherwise herein.

For example, the first electrode may be a positive electrode and the second electrode may be a negative electrode. In other examples, the first electrode may be a negative electrode and the second electrode may be a positive electrode. Generally, a positive electrode may comprise a current collector, which may be provided as a plate, a sheet or as a film, on which a positive active material is deposited. For example, the positive active material may comprise a lithium metal oxide such as lithium cobalt oxide or lithium iron phosphate or any other proper material. The current collector of the positive electrode may be made of an electrically conductive material, for example aluminum. Generally, a negative electrode may comprise a current collector, which may be provided as a plate, a sheet or as a film, on which a negative active material is deposited. For example, the negative active material may comprise a carbon-based material, such as graphite. The current collector of the negative electrode may be made of an electrically conductive material, for example copper.

The term separator is used herein in accordance with the relevant technical field of battery designing and manufacturing, particularly in terms of a secondary battery. In particular, the separator may be a porous membrane configured to allow charge carriers (e.g., ions, lithium ions and/or electrons) to pass through while being generally impermeable for solid materials. The separator may be provided between the first electrode and the second electrode so as to prevent a short circuit therebetween.

The transfer of charge carriers between the first and second electrode may be enabled by an electrolyte which may be at least partially present between the first electrode and the second electrode. The electrolyte may be added to the electrode assembly after being arranged in a battery case. In specific examples, the electrode assembly may be considered to comprise an electrolyte so as to be present between the first electrode and the second electrode.

The first electrode, the separator and the second electrode may be provided as layers (or sheets). The first electrode, the separator and the second electrode may be laid upon one another in a specific sequence. In specific examples, the second electrode, the separator, the first electrode and another separator are laid upon one another in that order to form a so called mono-cell. In other examples, one or more mono-cells may be placed (repeatedly) on top of the mono-cell in said order to form a multi-cell.

The electrode assembly may comprise the mono-cell (or the multi-cell) wound to a roll. Such a roll may also be referred to as a jellyroll. Specifically, in the mono-cell, the first electrode, the separator and the second electrode, and optionally another separator, may be wound together around the winding axis. Accordingly, the electrode assembly may have a cylindrical shape, and particularly a cylindrical shape with a spiral (helical) cross-section. Further, first electrode, the separator and the second electrode of the electrode assembly may be wound together (i.e., wound in a state of being stacked upon one other in said order) around the winding axis so for the electrode assembly to have a (general) cylindrical symmetry with respect to the winding axis. In the cylindrical symmetry, an axial direction may be parallel to the winding axis; a radial direction may be perpendicular to the winding axis and (approximately) perpendicular to an outer circumferential surface of the electrode assembly; and a circumferential direction may be perpendicular to the axial direction and the radial direction and go circularly around the winding axis. In addition, a winding direction may indicate a direction along one or each of the first electrode, the separator and the second electrode in a plan view. The winding direction may thus run along a spiral path around the winding axis. Depending on the context, the winding direction may be approximated to be circular around the winding axis, like the circumferential direction, in terms of a turning direction.

Unless indicated otherwise, an azimuth angle as used herein may indicate an angle between two (straight) lines in a plane perpendicular to the winding axis. The two lines forming the azimuth angle may coincide at the winding axis.

Generally, unless indicated otherwise, geometric features concerning a line, an angle, a curvature etc. as used herein refer to a plan view of the electrode assembly when viewed parallel to the winding axis. Accordingly, such geometric features may refer to the (approximate) cylindrical geometry of the electrode assembly in a wound state around the winding axis unless indicated otherwise. Furthermore, unless indicated otherwise, any line as used herein may indicate a straight line.

Here, the cylindrical symmetry as referred to herein may be an approximation in that a spiral plan view and/or a spiral cross-section of the electrode assembly is considered as an approximately circular plan view and/or a circular cross-section, respectively. The plan view may refer to a view parallel to the winding axis. The electrode assembly may have a spiral end face around the winding axis, as the first electrode, the separator and the second electrode are wound around the winding axis. The cross-section of the electrode assembly may refer to one perpendicular to the winding axis. The cross-section of the electrode assembly may be spiral around the winding axis, as the first electrode, the separator and the second electrode being wound around the winding axis.

At least one of the first electrode, the separator and the second electrode may have a rectangular shape in a plan view before winding. The winding axis may be parallel to (at least) one of the edges of the first electrode, the separator and the second electrode. In specific examples, the first electrode, the separator and the second electrode may each have a respective rectangular shape in a plan view, and arranged so that the corresponding edges of the first electrode, the separator and the second electrode are aligned parallel to each other.

Such an electrode assembly with the features as described above may be capable of achieving any of the technical effects as mentioned herein. Specifically, one, some or all of the electrodes of the electrode assembly may be subject to contraction and/or expansion in response to charging and discharging processes, which may lead to a deformation of the electrode assembly. The deformation may result in a winding core of the electrode assembly failing to maintain a cylindrical shape and collapsing thereby.

The electrode assembly as disclosed herein may exhibit a specific flatness fraction of the first electrode so as to suppress such problematic phenomenon of the winding core of the electrode assembly failing to maintain a cylindrical shape and thus collapsing due to deformation of the electrode assembly.

Consequently, the electrode assembly as disclosed herein may contribute to preventing damages to the first electrode, the second electrode and the separator. The electrode assembly as disclosed herein may also contribute to preventing an internal short-circuit between the first electrode and the second electrode. By this, the claimed subject matter may contribute to increasing the stability and overall lifetime of a battery.

The present disclosure may further refer to a manufacturing method of an electrode assembly. The method may implement flatness fraction of the first electrode in the mentioned manner, thereby enabling a continuous manufacturing process, for example, using a conventional roll-to-roll process equipment, and thus increasing productivity and economic efficiency. The method may further achieve any of the technical effects as mentioned above and/or detailed below.

In an embodiment example, the core part may be a part of the electrode assembly region within 3 turns from an inner end of the first electrode.

Furthermore, a curvature maximum point (detailed below) of the first electrode may be formed in or at a part of the electrode assembly within 3 turns of the first electrode from the inner end thereof.

The part of the electrode assembly which is encircled by a third turn of the first electrode from the inner end thereof may be referred to as the core part. The core part may correspond to the core part as mentioned above. The core part may be implemented with any, some or all of the features described below.

Alternatively or additionally, the core part may be an electrode assembly that is a region within 3 turns from one end portion, in a longitudinal direction, of the first electrode. The longitudinal direction may refer to a state of the electrode assembly before winding and may correspond to the winding direction as used herein after winding. The one end may refer to the inner end of the first electrode.

In an embodiment example, the first electrode may comprise a first electrode current collector, and a first electrode active material layer provided on at least one surface of the first electrode current collector such that the first electrode active material layer extends to an inner end of the first electrode current collector, and the inner end of the first current collector corresponds to the inner end of the first electrode.

As the first electrode is wound around the winding axis, the first electrode extends, in a plan view, between an inner end of the first electrode and an outer end the first electrode in the winding direction. The inner end of the first electrode may be located at a radial inner position, for example near or close to the winding axis. The outer end of the first electrode may be located at a radial outward position, for example at or near the outer circumference of the electrode assembly. Similar may apply, alternatively or additionally, to the second electrode.

In other words, the first electrode may comprise the first current collector and the first active material layer applied thereon. In the direction opposite to the winding direction, the first electrode terminates (at the inner end thereof) where the first current collector terminates. That is, the first electrode may not extend further than the first current collector in the winding direction.

The active material layer may indicate a layer containing, or made of, an electrode active material as specified above. For example, the first electrode may be a positive electrode, and the active material layer may be a layer of a positive active material.

In an embodiment example, the first electrode may comprise a first electrode uncoated portion in which the first electrode active material layer is not provided. The electrode assembly may further comprise a first electrode tab physically connected to or formed on the first electrode uncoated portion.

The first electrode uncoated portion may indicate a portion of the first electrode, in particular of the first current collector, that is free of the first active material layer (i.e., free of the first active material, or the active material of the first electrode).

At least one electrode tab may be formed from, on or at the first electrode uncoated portion. The first electrode uncoated portion may be cut or notched (e.g., by forming one or more slits, notches or cuts or the like from an edge of the first electrode uncoated portion into the first electrode uncoated portion) so as to form one or more first electrode tabs. Alternatively or additionally, at least one electrode tab may be provided separately and attached to the first current collector or to the first electrode uncoated portion.

In an embodiment example, an angle formed between a line extending from the winding axis through the inner end of the first electrode and a line extending from the winding axis through a point at which curvature of the first electrode may be 1 or less is greater than o°.

A mathematical value of the curvature may be determined as detailed above and/or specified below. In particular, the point at which the curvature of the first electrode is 1 or less may be within three turns from the inner end of the first electrode, i.e., in the core part of the electrode assembly. The angle as mentioned may refer to an azimuth angle as specified above, with the vertex being in (coinciding with) the winding axis.

In an embodiment example, the flatness fraction of the first electrode is determined after activation of the electrode assembly.

Activation as used herein may refer to a process in which specific temperature(s) and charging and discharging conditions are applied to the electrode assembly (or a battery cell containing the same) to prepare the electrode assembly for use in a secondary battery. The activation may be also referred to as formation. The activation may include an aging process, a charging process and a discharging process, which may be performed in a specific order and, optionally, repeated in a specific order. The aging process may be configured for an electrolyte to permeate into the first electrode and the second electrode. For example, the aging process may be performed by storing the electrode assembly at a specific temperature (e.g. at 30 °C) for a specific duration (e.g., 30 minutes, 1 hour, 2 hours or 3 hours). The charging process may be configured for forming a layer of SEI, solid electrolyte interphase, from a decomposition of the electrolyte on the surface of the negative electrode. The charging process may include charging the electrode assembly to a certain charge level. After the charging process, optionally, another aging process may be performed at a raised temperature (e.g., 40°C, 50°C, 60°C or 70°C). Then the electrode assembly may be discharged at a specific C-rate (e.g., 0.1 C, 0.2 C, 0.5 C or 1.0 C). Optionally, a degassing process may be performed to remove a gas formed during the above processes of activation.

The first electrode and/or the second electrode may contract and/or expand during the activation. Hence, the technical effect achieved by the present invention maybe particularly beneficial for an electrode assembly after undergoing (at least part of) the activation process.

In an embodiment example, the flatness fraction of the first electrode may be determined after charging and discharging 50 times under conditions of 25°C, 1C charge, and 1 C discharge.

Accordingly, the flatness fraction may be determined after at least 50 times of charge and discharge cycles (repetition) of the electrode assembly. Hence, a state or a quality of the electrode assembly may be determined with an increased accuracy.

In an embodiment example, an angle formed between a line extending from the winding axis and through an inner end of the first electrode and a line extending from the winding axis and through a curvature maximum point may be between 40° and 98°. In particular, the curvature maximum point may be located within the core part.

According to the present disclosure, a straight line (a first line) may be drawn that connects the winding axis with an inner end of the first electrode in a plane perpendicular to the winding axis. For example, such a line extends from the winding axis through the inner end of the first electrode in a plane perpendicular to the winding axis. The line may be imaginary and constructed specifically for determining an angle between it (i.e., the first line) and another line (i.e., the second line as detailed below) that goes through the winding axis and the curvature maximum point.

According to the present disclosure, a straight line (a second line) may be drawn that connects the winding axis with the curvature maximum point of the first electrode in a plane perpendicular to the winding axis. For example, such a line extends from the winding axis through the curvature maximum point of the first electrode in a plane perpendicular to the winding axis. The line may be imaginary and constructed specifically for determining the angle between it (i.e., the second line) and the line extending through the winding axis and the inner end of the first electrode (i.e., the first line).

In the present disclosure, said angle between the line extending from the winding axis through an inner end of the first electrode and the line extending from the winding axis through the curvature maximum point (i.e., between the first line and the second line), in a view parallel to the winding axis, may be 40° or greater and 98° or smaller. Alternatively, the angle may be in any of the value range as disclosed herein. As mentioned above, the view parallel to the winding axis may also mean a viewing angle in the axial direction of a cylindrical symmetry of the electrode assembly.

In an embodiment example, the curvature maximum point may be a point at which the curvature of the first electrode is maximum in a region in a cross-section of the electrode assembly perpendicular to the winding axis, the region extending from the inner end of the first electrode over an azimuth angle of 0° to 180° in a winding direction in which the electrode assembly is wound. The curvature maximum point may be located inside the core part of the electrode assembly.

Generally, the term curvature may be used herein as generally used in mathematics. In particular, the curvature may indicate a measure by which a curve deviates from being a straight line. Alternatively or additionally, the curvature may indicate a measure by which a surface deviates from being a plane. The curvature as used herein may indicate for any part of a curve how much a direction of the curve changes over a small (infinitesimal) distance travelled (e.g., in angle per distance). The curvature may be a measure of change of direction of a point along the curve. Particularly, the curvature may be a measure for a (instantaneous) change rate of unit tangent vector to the curve at point P, as the point P moves along the curve at unit speed. In a specific example, a position of point P(s) may be a function of the parameter s, which may be, for example, time or an arc length from a given origin; and T(s) may be a unit tangent vector of the curve at P(s), which is also the derivative of P(s) with respect to s. In such an example, the derivative of T(s) with respect to s may be a vector that is normal to the curve, and its length may be the curvature.

The curve as referred to herein may be a profile (and/or a contour, an outline, or the like) of the first electrode in the plan view (i.e., in a view parallel to the winding direction). Particularly, the first electrode may be provided as a sheet or a layer, so that the first electrode is perceived as a thick curve in the plan view. Alternatively or additionally, the same may apply to the second electrode and/or to the separator. The curve may be continuously differentiable near P, so that a tangent may vary continuously along the curve. The curve may be twice differentiable at any P so that a curvature exists along the curve, for example as a derivative of T(s) with respect to s as defined above.

Alternatively or additionally, the curvature as used herein may be determined in terms of an osculating circle at the curve. An osculating circle at point P of a curve may be a circle that has the same tangent as well as the same curvature as the curve. A tangent line may be an approximation of a curve at a point P of the curve. The osculating circle may be an approximation of the curve at the point P. The curvature of a straight line may be zero. If the curvature at a point is not equal to zero, then the reciprocal of the curvature is considered as a radius of curvature, i.e., the radius of an osculating circle. The center of the osculating circle is considered as the center of curvature and can be constructed by plotting the radius of curvature perpendicular to the tangent of the curve, in the direction in which the curve bends.

Further, the curvature as used herein may be determined as a derivative (or differential quotient) of a central angle at the center of the osculating circle with respect to a circular arc at the osculating circle.

In any of the above options for determining the curvature of the first electrode, the curvature may be determined in a plan view image or a cross-sectional image of the electrode assembly taken under a view angle parallel to the winding axis. In particular, the curve may be determined as the profile of the first electrode when visually determined in an image taken under a view angle of the electrode assembly parallel to the winding axis. The curvature may be determined from the curve.

The curvature maximum point as used herein may indicate a point at (or of or in) the first electrode (or the second electrode) at which a curvature of the first electrode (or the second electrode) is the greatest (i.e., at maximum) in a plan view of the electrode assembly. Accordingly, the curvature maximum point may be a point at the first electrode at which the first electrode exhibits the greatest curvature in the plan view of the electrode assembly. Alternatively or additionally, the curvature maximum point may be a point at the first electrode at which the osculating circle at the first electrode is the smallest. Additionally or alternatively, the same may apply to the second electrode and/or the separator.

In specific examples, the curvature of the first electrode may generally decrease as the first electrode extends from the winding axis toward an outer circumference of the electrode assembly. In other words, the curvature of the first electrode may generally decrease in a radial outward direction thereof or in an outward (winding) direction along the spiral of the first electrode. The general decrease of the curvature of the first electrode in an outward radial (or winding) direction may be due to the winding of the first electrode, the separator and the second electrode together around the winding axis. Additionally or alternatively, the curvature of the second electrode and/or the separator may generally decrease in a radial outward direction.

At the same time, the curvature maximum point may occur in a portion that is closer to the winding axis than to the outer circumference of the electrode assembly. A part of the electrode assembly that is closer to the winding axis than to the outer circumference of the electrode assembly in a plan view of the electrode assembly may be referred to as a core part. The core part may be further specified as detailed below. The curvature maximum point may occur, or may be located, in the core part of the electrode assembly (in a plan view). This may apply to the first electrode. Additionally or alternatively, this may also apply to the second electrode and/or the separator.

As specified above, the winding direction as used herein may follow the winding of the first electrode (and/or the second electrode and the separator), which may be a spiral path around the winding axis. Accordingly, the winding direction of the first electrode may start at the inner end of the first electrode and follow the winding of the first electrode to its outer circumferential end in the plan view (and/or in a cross-section perpendicular to the winding axis). In the context of determining the azimuth angle, however, the winding direction may be a circular direction around the winding axis in the direction of the winding of the first electrode (i.e., directional in terms of a turning direction).

The azimuth angle may be determined in the cross-section of the electrode assembly perpendicular to the winding axis (or in the plan view of the electrode assembly), wherein the vertex of the azimuth angle coincides with the winding axis. In the context of the above-mentioned region in the cross-section of the electrode assembly, one of the sides of the azimuth angle may be given by a straight line that extends from the winding axis to the inner end of the first electrode (i.e., the first line). The other side of the azimuth angle may be given by a straight line that extends from the winding axis to the boundary of the above-mentioned region in the cross-section of the electrode assembly.

Said region extends over (or spans over, or covers) an azimuth angle of 0° to 180°. In other word, said region covers an entire area between one boundary corresponding to an azimuth angle of 0° and another boundary corresponding to an azimuth angle of 180°. The boundaries meet at the winding axis and a further boundary is given by the outer circumference of the electrode assembly. A straight line extending from the winding axis through the inner end of the first electrode, i.e., the first line as indicated above, may correspond to an azimuth angle of 0°. The region extends opposite to the winding direction, i.e., covers an area opposite to an initial portion of the first electrode that extends from its inner end in the winding direction. With said region extending over an azimuth angle range of 0° to 180°, the region may cover half of the cross-section of the electrode assembly perpendicular to the winding axis (and/or half of the plan view of the electrode assembly), bounded by a straight line that extends through the winding axis and the inner end of the first electrode. In view of this, the region as mentioned above may have a shape of a semicircle or have a semicircular shape.

In an embodiment example, a circularity of the first electrode may be 89% or greater in or at the core part.

The circularity as used herein may refer to a roundness in accordance with the teachings of the mathematical geometry. In particular, the circularity may be determined according to ISO 1101. The circularity as used herein may be determined as a two-dimensional parameter in a plan view of the electrode assembly. Additionally or alternatively, the circularity may be determined as detailed below.

In an embodiment example, a first extension line may be drawn by extending a straight line connecting two points where a direction of curvature changes within a distance of 5 mm from the inner end of the first electrode on the first surface of the first electrode. A second extension line may be drawn by extending a straight line connecting two points within a distance of 5 mm from the inner end of the first electrode on a surface of the second electrode facing the first surface of the first electrode. The first extension line and the second extension line may form an angle of 25° or less.

In an embodiment example, the first electrode does not comprise a crack or a wrinkle in or at the core part of the electrode assembly.

The present disclosure further discloses a secondary battery. The secondary battery may comprise the electrode assembly as disclosed herein.

In an embodiment example, the secondary battery may further comprise a battery case, particularly a cylindrical battery case, in which the electrode assembly is accommodated.

An exemplary embodiment of the present invention provides an electrode assembly in which a first electrode, a separator, and a second electrode are stacked and wound, wherein the first electrode has a first surface in a direction of a winding axis of the electrode assembly and a second surface opposite to the first surface, and wherein at the core part of the electrode assembly, a flatness fraction of the first electrode is greater than 3% and 13.5% or less.

Another exemplary embodiment of the present invention provides a secondary battery including the electrode assembly described above; and a battery case for accommodating the electrode assembly.

The electrode assembly according to an exemplary embodiment of the present invention adjusts the flatness fraction of the first electrode, making it possible to address the phenomenon that a core cavity fails to maintain a circular shape and collapses due to deformation of an electrode assembly resulting from contraction/expansion of an electrode during charging and discharging of the battery, to prevent damage to the second electrode and the separator, and to prevent an internal short-circuit between the fisrt electrode and the second electrode, so the stability and life characteristics of the battery can be improved.

In addition, the secondary battery according to the present invention can address the phenomenon that the core cavity fails to maintain a circular shape and collapses due to deformation of an electrode assembly resulting from contraction/expansion of an electrode during charging and discharging of the battery, prevent damage to the second electrode and the separator, and prevent an internal short-circuit between the first electrode and the second electrode, so the stability and life characteristics of the battery can be improved.

The effects of the present invention are not limited to the foregoing effects, and effects not described will be apparently understood by one skilled in the art from the present specification and accompanying drawings.

### BRIEF DESCRIPTION OF THE DRAWINGS

FIG. 1 shows a correlation among an angle formed between a longitudinal end portion of a first electrode and a point at which a curvature of the first electrode is greatest, a flatness fraction of the first electrode, and core deformation.
FIG. 2 is a graph showing a correlation between a flatness fraction of a first electrode and an angle formed between a longitudinal end portion of the first electrode and a point at which a curvature of the first electrode is greatest.
FIG. 3 is images showing a CT image of an electrode assembly according to Example 1 and a curvature of a first electrode extracted from the CT image.
FIG. 4 is images showing a CT image of an electrode assembly according to Example 2 and a curvature of the first electrode extracted from the CT image.
FIG. 5 is images showing a CT image of an electrode assembly according to Comparative Example 1 and a curvature of the first electrode extracted from the CT image.
FIG. 6 is images showing a CT image of an electrode assembly according to Comparative Example 2 and a curvature of the first electrode extracted from the CT image.
FIG. 7 is images showing a CT image of an electrode assembly according to Comparative Example 3 and a curvature of the first electrode extracted from the CT image.
FIG. 8 is a CT image of an electrode assembly according to Comparative Example 4 and an image showing occurrence of a core crack of a first electrode.
FIG. 9 is a CT image of an electrode assembly according to Comparative Example 5 and an image showing occurrence of a core crack of a first electrode.
FIG. 10 schematically shows a method for evaluating whether the core impingement has occurred.
FIG. 11 is CT images showing sliding ranges of longitudinal end portions of a first electrodes of secondary batteries according to Reference Experimental Example 1 and Reference Experimental Example 2.

### DETAILED DESCRIPTION

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

An exemplary embodiment of the present invention provides an electrode assembly in which a first electrode, a separator, and a second electrode are stacked and wound, wherein the first electrode has a first surface in a direction of a winding axis of the electrode assembly and a second surface opposite to the first surface, and wherein at the core part of the electrode assembly, a flatness fraction of the first electrode is greater than 3% and 13.5% or less.

Here, the flatness fraction may be a fraction (%) of the number of measurement points with a curvature of 1 or less, based on 100% of the number of measurement points located on the first surface of the first electrode.

Additionally, the curvature may be calculated from a plurality of measurement points located on the first surface of the first electrode extracted from a computed tomography (CT) image, as described below.

The electrode assembly according to an exemplary embodiment of the present invention adjusts the flatness fraction of the first electrode, making it possible to address the phenomenon that a core cavity fails to maintain a circular shape and collapses due to deformation of an electrode assembly resulting from contraction/expansion of an electrode during charging and discharging of the battery, to prevent damage to the second electrode and the separator, and to prevent an internal short-circuit between the first electrode and the second electrode, so the stability and life characteristics of the battery can be improved.

Specifically, when charging and discharging a battery, the electrodes included in the electrode assembly undergo repeated contraction/expansion, but outward expansion is limited due to the rigidity of a battery case surrounding an outer peripheral surface of the electrode assembly, so stress may be concentrated in a direction of a cavity that is an empty space located at the core part. Accordingly, a possibility of core deformation of the electrode assembly may increase.

The core deformation may be classified into a phenomenon that the core cavity of the electrode assembly fails to maintain a circular shape and collapses when internal stress reaches a certain level or higher, i.e., core collapse, and a phenomenon that an end portion of a first electrode located at the core part and a second electrode adjacent thereto are deformed beyond a certain level, causing damage to a separator between the first electrode and the second electrode and bringing the first electrode and the second electrode into direct contact with each other, i.e., core impingement.

In particular, the core collapse may be concentrated in a region vulnerable to the internal stress of the electrode assembly. Specifically, the core collapse may be concentrated in a region where the curvature of the first electrode is a specific value or smaller, i.e., a flat region. That is, at the core part of the electrode assembly, deformation due to internal stress may begin to occur from a region where the curvature of the first electrode is a specific value or smaller, and after a certain point in time, the core cavity no longer maintains a circular shape and may completely collapse. In an electrode assembly in which the core collapse has occurred, lithium ions can no longer be smoothly transferred between the first electrode and the second electrode, so the battery life may deteriorate.

Here, the curvature of the first electrode may be affected by a step due to a thickness of an electrode, a tab, or the like, a shape of the winding core, the tension acting on the electrode assembly upon winding, and the like. For example, the winding core may include a pair of winding core parts separated around the spacing part into which a separator is inserted, and when a certain level of tension is applied, the winding core is distorted, which inevitably generates a region where the curvature of the first electrode is a specific value or smaller, that is, a flat region, and the core collapse may occur in the region where the curvature of the first electrode is the specific value or smaller.

In this case, when the flatness fraction of the first electrode is adjusted to a specific range, the phenomenon that the core cavity fails to maintain a circular shape and collapses, that is, the core collapse, can be addressed. With this, damage to the second electrode and the separator can be prevented and an internal short-circuit between the first electrode and the second electrode can be prevented, so the stability and life characteristics of the battery can be improved.

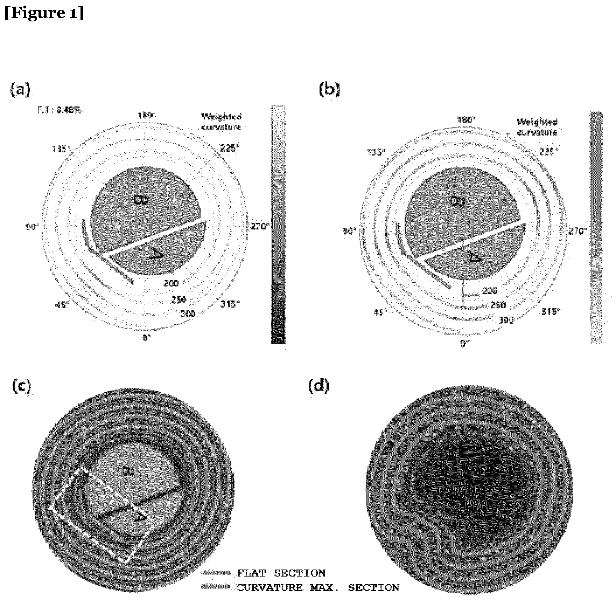

FIG. 1 shows a correlation among an angle formed between a longitudinal end portion of a first electrode of the present invention and a point at which a curvature of the first electrode is greatest, a flatness fraction of the first electrode, and core deformation.

Specifically, FIGS. 1(a) to 1(c) show a CT image of an electrode assembly according to an exemplary embodiment of the present invention and a curvature of the first electrode extracted from the CT image. More specifically, FIG. 1(a) shows a flat region of the electrode assembly in relation to the winding core, FIG. 1(b) shows a point at which the curvature of the electrode assembly is greatest in relation to the winding core, and FIG. 1(c) shows the flat region of the electrode assembly and the point at which the curvature is greatest in relation to the winding core. Note that, FIG. 1(d) is an image of core deformation having occurred in the flat region of the electrode assembly according to FIGS. 1(a) to 1(c) after cycles.

Specifically, FIGS. 1(a) to 1(c) express, in color coordinates, a ratio occupied by measurement points having a curvature equal to or less than an arbitrarily set reference value with respect to the curvature measured at each measurement point. Here, the set reference value is a specific value within a range of 0.5 to 1.0, and the range of the color index expressed on the right side of the color coordinates is 0 to 0.8 in FIG. 1(a) and 1 to 1.5 in FIG. 1(b).

More specifically, in FIG. 1(a), when the color distribution range of the curvature measured at each measurement point is set to 0 to 0.8, a portion where regions with low k values are distributed is implemented as color coordinates to visually express a flat region and a flatness fraction, and in FIG. 1(b), when the color distribution range of the curvature measured at each measurement point is set to 1 to 1.5, a portion where regions with high k values are distributed is implemented as color coordinates to visually express a point at which the curvature is greatest. In this case, each measurement point was extracted from the CT image of the first electrode as described above, and it can be confirmed that the longitudinal end portion of the first electrode located at the core part is located in the 6 o'clock direction.

According to an exemplary embodiment of the present invention, the winding may be performed using a winding core including a spacing part into which the separator is inserted, a first winding core part provided on one side of the spacing part with respect to the spacing part, and a second winding core part provided on the other side of the spacing part and having a different cross-sectional area from that of the first winding core part.

Specifically, the winding core may include a spacing part into which the separator is inserted, a first winding core part provided on one side with respect to the spacing part, and a second winding core part provided on the other side and having a different cross-sectional area from that of the first winding core part. Since the winding core has the spacing part, a stack, such as a separator inserted into the spacing part, may be wound in a direction opposite to a rotational direction of the winding core by rotation of the winding core.

In this case, since the winding core includes a first winding core part and a second winding core part having a different cross-sectional area from that of the first winding core part, when the high tension is applied to the winding core, distortion may occur in a relatively small winding core part. Accordingly, with the spacing part as a center, the point at which the curvature of the first electrode is greatest may be located at a position adjacent to a relatively large winding core, and the flat region of the first electrode may be located at a position adjacent to a relatively small winding core.

In addition, in the region above 0° and 180° or less in the opposite direction to the direction in which the electrode assembly is wound, i.e., in the rotational direction of the winding core, based on the longitudinal end portion of the first electrode, the number of turns of the first electrode up to the outermost layer is relatively smaller and a distance from the longitudinal end portion of the first electrode that can slide is relatively longer, as compared to a region above 180° and 360° or less, so the concentrated stress is not relieved. Therefore, a possibility of deformation in the direction of the core cavity at the corresponding location may be higher.

That is, the winding core may include a pair of winding core parts separated around the spacing part into which a separator is inserted, and when a certain level of tension is applied, the winding core is distorted, which inevitably generates a region where the curvature of the first electrode is a specific value or smaller, that is, a flat region, and the core collapse may occur in the region where the curvature of the first electrode is the specific value or smaller.

In this case, at the core part of the electrode assembly, when the flatness fraction of the first electrode is adjusted, the phenomenon that the core cavity fails to maintain a circular shape and collapses, that is, the core collapse, can be addressed. With this, damage to the second electrode and the separator can be prevented and an internal short-circuit between the first electrode and the second electrode can be prevented, so the stability and life characteristics of the battery can be improved.

According to an exemplary embodiment of the present invention, the flatness fraction of the first electrode may be greater than 3% and 13.5% or less at the core part of the electrode assembly. Specifically, at the core part of the electrode assembly, the flatness fraction of the first electrode may be greater than 3% and 13.5% or less, 5% or greater and 13% or less, 5% or greater and 10% or less, 7% or greater and 10% or less, or 7.5% or greater and 10% or less.

When the above-described flatness fraction range of the first electrode is satisfied, it is possible to address the phenomenon that the core cavity fails to maintain a circular shape and collapses due to deformation of the electrode assembly resulting from contraction/expansion of an electrode during charging and discharging of the battery, to prevent damage to the second electrode and the separator, and to prevent an internal short-circuit between the first electrode and the second electrode, so the stability and life characteristics of the battery can be improved.

Here, the flatness fraction (%) may refer to a fraction of the flat region of the first electrode in the first electrode that is a measurement target, and the flat region may refer to a region with a curvature equal to or smaller than a reference value.

That is, the flatness fraction may refer to a fraction of a region with a curvature value equal to or smaller than a reference curvature value in the first electrode that is a measurement target. For example, the flatness fraction may be a fraction (%) of the number of measurement points with a curvature of 1 or less, based on 100% of the number of measurement points.

Since the flatness fraction of the first electrode maybe determined depending on the reference curvature value, when the range of the above-described reference curvature value is satisfied, a degree to which the core part deviates from a circular shape can be determined more efficiently, and the reliability of the determined flatness fraction of the first electrode may be higher.

In the below, as regards the flatness fraction of the first electrode of the present invention, a curvature measurement target, a curvature measurement method, and a curvature measurement time point will be described in more detail.

According to an exemplary embodiment of the present invention, the curvature may be measured for the first electrode, at the core part of the electrode assembly.

Here, the 'core part' may be a region including a cavity located on a winding axis of the electrode assembly and a part of a stack structure of the wound separator/second electrode/separator/first electrode.

In other words, the core part may include a cavity located on the winding axis of the electrode assembly, and a region up to one end portion, in a longitudinal direction, of the first electrode located on the innermost side where winding of the electrode assembly begins, that is, a region not including the first electrode. In addition, the core part may further include a region of a predetermined length including the first electrode from one end portion, in the longitudinal direction, of the first electrode, in a direction in which the first electrode is wound.

According to an exemplary embodiment of the present invention, the core part may be a region within 3 turns from one end portion, in the longitudinal direction, of the first electrode. Specifically, the core part may be a region within 1 turn to 2.5 turns or within 1.5 turns to 2 turns from one end portion, in the longitudinal direction, of the first electrode.

Here, 1 turn may refer to a length required to wind an electrode or separator included in an electrode assembly by 360° from a reference point, and the length may be determined depending on an outer diameter of a winding core used for winding the electrode assembly, thicknesses of the separator and the electrode, and the number of windings of the separator and electrode positioned on an inner side of the reference point. For example, 1 turn of the first electrode may refer to a length required to wind the first electrode by 360° from the longitudinal end portion of the first electrode, in a direction in which the electrode assembly is wound.

In other words, the core part may refer to a region up to a point spaced 3 turns or less from one end portion, in the longitudinal direction, of the first electrode, a region up to a point spaced within 1 turn to 2.5 turns from one end portion, in the longitudinal direction, of the first electrode, or a region up to a point spaced within 1.5 turns to 2.5 turns from one end portion, in the longitudinal direction of the first electrode.

Since the flatness fraction of the first electrode maybe determined depending on the range of the core part, when the range of the core part described above is satisfied, a degree to which the core part deviates from a circular shape can be determined more efficiently, and the reliability of the determined flatness fraction of the first electrode may be higher.

According to an exemplary embodiment of the present invention, the curvature may be measured at the core part of the electrode assembly, may be measured for the first electrode, at the core part of the electrode assembly, and may be measured by extracting the first electrode from a CT image of the core part of the electrode assembly.

When a curvature measurement target is the first electrode located at the core part of the electrode assembly, the reliability of the curvature measurement may be higher, and by adjusting a position of the longitudinal end portion of the first electrode, the flatness fraction of the first electrode can be more easily adjusted. With this, the deformation of the end portion of the first electrode located at the core part and the second electrode adjacent thereto is reduced, making it possible to address a phenomenon that the separator located between the first electrode and the second electrode is damaged, that is, core impingement.

According to an exemplary embodiment of the present invention, the curvature may be calculated from a plurality of measurement points located on the first surface of the first electrode extracted from a computed tomography (CT) image. Specifically, the curvature may be measured with respect to the first surface of an extracted first electrode, which is a direction of the winding axis of the electrode assembly, after extracting the first electrode from a CT image of the electrode assembly. More specifically, the curvature may be calculated from a plurality of measurement points located at regular intervals on the first surface of the first electrode. For example, the plurality of measurement points may be located at 2° intervals on the first surface of the extracted first electrode around the winding axis.

According to an exemplary embodiment of the present invention, the measurement points may be 180 or more. Specifically, the measurement points may be 180 or more and 720 or less. More specifically, the measurement points may be 240 or more and 660 or less, 300 or more and 600 or less, or 360 or more and 540 or less.

Since the flatness fraction of the first electrode maybe determined depending on the number of measurement points, when the range of the number of measurement points described above is satisfied, a degree to which the core part deviates from a circular shape can be determined more efficiently, and the reliability of the determined flatness fraction of the first electrode may be higher.

According to an exemplary embodiment of the present invention, the curvature may be measured at separate measurement points within the above-described range of the number of measurement points located at regular intervals or arbitrarily selected, at the core part, and the point at which the curvature is greatest and the flatness fractions may be determined.

According to an exemplary embodiment of the present invention, the curvature may be a curvature in accordance with Formula 1 below. Specifically, the curvature calculated at the measurement point can be calculated according to Formula 1 below using coordinate values, that is, x-coordinate and y-coordinate, obtained from a plurality of measurement points located on the first surface of the first electrode extracted from the CT image.

[Formula 1] k=(x'y"-y'x")/(x'2+y'2)3/2

In Formula 1 above, k is a curvature of the first electrode, x is an x-coordinate of the measurement point, y is a y-coordinate of the measurement point, x' is a first derivative value of x, and y' is a first derivative value of y, x" is a second derivative value of x, and y" is a second derivative value of y.

In other words, the calculation of the curvature may mean measuring x-coordinate and y-coordinate values at a plurality of measurement points at regular intervals located on the first surface of the first electrode, and calculating curvature values using the measured x-coordinates, y-coordinates and Formula 1. Specifically, the curvature may be calculated as a parametric expression of a plane curve, and the curvature, that is, a degree of bending, increases as the k value according to Formula 1 increases. More specifically, the curvature may be calculated using the above Formula through a Python program, and the x and y coordinate values may range from -3 to +3. Note that x' and y' may mean the slope of a tangent at each coordinate, and x" and y" may mean a rate of change of the slope.

If necessary, for the curvature value, one normalized using a radius of curvature of the electrode assembly for each measurement point may be used.

According to an exemplary embodiment of the present invention, at the core part of the electrode assembly, the angle formed between the longitudinal end portion of the first electrode and a point at which the curvature of the first electrode is 1 or less may be greater than 0° around the winding axis.

Specifically, at the core part of the electrode assembly, the angle formed between the longitudinal end portion of the first electrode and the point at which the curvature of the first electrode is 1 or less may be greater than 0° and less than 50° around the winding axis.

Specifically, at the core part of the electrode assembly, the angle formed between the longitudinal end portion of the first electrode and the point at which the curvature of the first electrode is 1 or less may be 5° or greater and less than 50°, 10° or greater and 45° or less, or 15° or greater and 40° or less around the winding axis.

In other words, a region where the curvature of the first electrode is 1 or less, that is, a flat region, may be located between the point at which the curvature of the first electrode is greatest and the longitudinal end portion of the first electrode, and may not overlap the longitudinal end portion of the first electrode.

According to an exemplary embodiment of the present invention, the flatness fraction of the first electrode may be measured after activation. Specifically, the flatness fraction of the first electrode may have been measured, after activation, in a state of standby for normal use and in a normally used state, that is, prior to the occurrence of core deformation. For example, the flatness fraction of the first electrode may be measured after charging and discharging 50 times under conditions of 25°C, 1 C charge, and 1C discharge.

Here, the term 'after activation' may mean after a predetermined number of cycles for manufacturing a secondary battery and finishing a product. Specifically, the 'after activation' may include a storage state before start of active use including multiple cycles for power supply purposes, that is, before and after sale, and a state in which self-discharge during storage has been made.

The activation may refer to a step of checking the stability of a battery by repeating aging and charging/discharging after assembly of an electrode assembly and a battery case, and a 'state before the occurrence of core deformation after activation' can be achieved in a simple manner by performing a predetermined number of cycles, for example, 50 cycles under conditions of 1C/1C @25°C for an obtained battery at any time point after assembly. However, the activation conditions are not limited to the above as long as they are within the range used in the art for achieving the same purpose.

Since the flatness fraction of the first electrode maybe determined depending on the curvature measurement time point, when the curvature measurement time point described above is satisfied, a degree to which the core part deviates from a circular shape can be determined more efficiently, and the reliability of the determined flatness fraction of the first electrode may be higher.

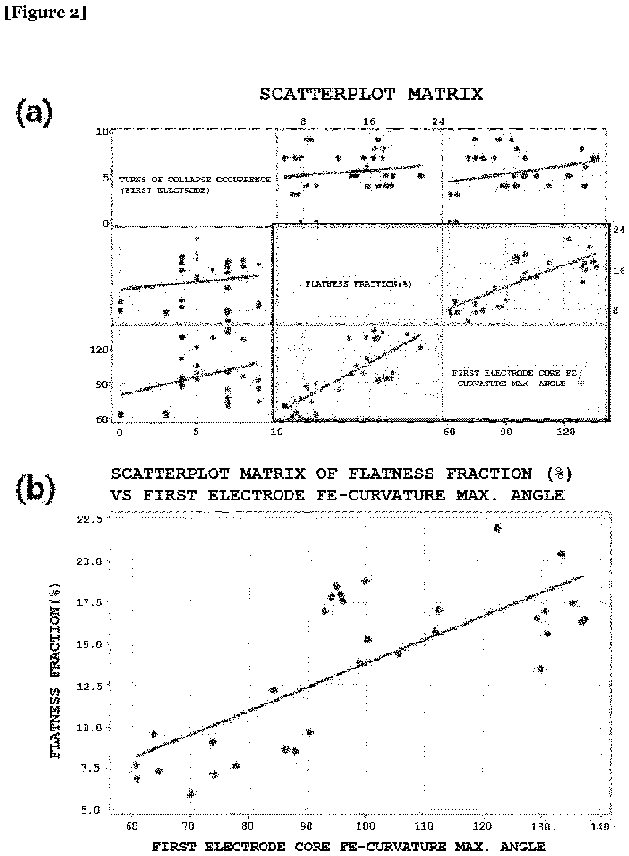

FIG. 2 is a graph showing a correlation between a flatness fraction of a first electrode and an angle formed between a longitudinal end portion of the first electrode and a point at which a curvature of the first electrode is greatest. Specifically, FIG. 2(a) is a scatterplot matrix in which any factors extracted from CT images before and after 27 acceleration cycles (1C/1C 50 cycles) of the same cell are quantified, and FIG. 2(b) is a graph showing a correlation between a flatness fraction of the first electrode and the angle formed between the longitudinal end portion of the first electrode and the point at which the curvature of the first electrode is greatest.

Specifically, referring to FIG. 2, the location where the core deformation occurs may be determined depending on the angle formed between the longitudinal end portion of the first electrode and the point at which the curvature of the first electrode is greatest or the value of the flatness fraction of the first electrode, and the location where the core deformation of the electrode assembly occurs may coincide with a region where the curvature of the first electrode is 1 or less, that is, a flat region. That is, the lower the flatness fraction, the lower the possibility of the occurrence of core deformation in the flat region, which is the location where the core deformation occurs.

Note that, as an additional influencing factor related to the occurrence of core deformation, when a first electrode tab is positioned at 12 o'clock, a second electrode tab located at the outermost portion is preferably located between 5 o'clock and 8 o'clock or between 6 o'clock and 7 o'clock, the longitudinal end portion of the first electrode located at the core part is preferably located between 5 o'clock and 9 o'clock or between 6.5 o'clock and 8 o'clock, and the longitudinal end portion of the first electrode located at the outermost portion is preferably located between 4 o'clock and 6 o'clock or between 4.5 o'clock and 5.5 o'clock. Note that, an area of the core cavity is preferably 10 mm2 or greater and 40 mm2 or less, or 27 mm2 or greater and 33 mm2 or less. When the above-described additional influencing factors satisfy the above-described ranges, respectively, the effect of reducing the core deformation may be more excellent. Note that, the unit 'o'clock' indicates the relative position of each factor in a clockwise direction when the first electrode tab is positioned at 12 o'clock on the CT image, and may be measured in the opposite direction to the direction in which the electrode assembly is wound, that is, in the rotational direction of the winding core used for winding the electrode assembly. For example, 6 o'clock means forming an angle of 180° with the first electrode tab positioned at 12 o'clock.

According to an exemplary embodiment of the present invention, the first electrode may not include a crack or wrinkle at the core part of the electrode assembly. Here, the crack may refer to a crack that is visually recognized with the naked eye on the surface of the first electrode, and the wrinkle may refer to a case where a wrinkle or fold visually recognized with the naked eye has occurred on the surface of the first electrode.

When an electrode assembly including the first electrode with cracks is inserted into a battery case, the possibility of occurrence of low voltage and short-circuit due to foreign matters greatly increases. On the other hand, since the electrode assembly according to an exemplary embodiment of the present invention does not include a first electrode with cracks or wrinkles at the core part, the battery stability can be improved.

According to an exemplary embodiment of the present invention, at the core part of the electrode assembly, the flatness fraction of the first electrode may have a positive correlation with the angle formed between the longitudinal end portion of the first electrode and the point at which the curvature of the first electrode is greatest. Specifically, referring to FIG. 2(b), the correlation coefficient between the flatness fraction of the first electrode and the angle formed between the longitudinal end portion of the first electrode and the point at which the curvature of the first electrode is greatest may be about 0.756.

According to an exemplary embodiment of the present invention, at a core part of the electrode assembly, an angle formed between a longitudinal end portion of the first electrode and a point at which a curvature of the first electrode is greatest may be greater than 40° and 98° or less around a winding axis. Specifically, at the core part of the electrode assembly, the angle formed between the longitudinal end portion of the first electrode and the point at which the curvature of the first electrode is greatest may be greater than 40° and 98° or less, 45° or greater and 95° or less, 45° or greater and 90° or less, 45° or greater and 80° or less, 45° or greater and 70° or less, 45° or greater and 65° or less, 50° or greater and 95° or less, 50° or greater and 90° or less, 50° or greater and 80° or less, 50° or greater and 70° or less, 50° or greater and 65° or less, 60° or greater and 95° or less, 60° or greater and 90° or less, 60° or greater and 80° or less, 60° or greater and 70° or less, or 60° or greater and 65° or less around the winding axis.

According to an exemplary embodiment of the present invention, the angle formed between the longitudinal end portion of the first electrode and the point at which the curvature of the first electrode is greatest may be measured in a region above 0° and 180° or less in an opposite direction to the direction in which the electrode assembly is wound, based on the longitudinal end portion of the first electrode. That is, the point at which the curvature is greatest may be a point at which the curvature is greatest in the region above 0° and 180° or less in the opposite direction to the direction in which the electrode assembly is wound, based on the longitudinal end portion of the first electrode.

In other words, the angle formed between the longitudinal end portion of the first electrode and the point at which the curvature of the first electrode is greatest may be measured in the region above 0° and 180° or less in the opposite direction to the direction in which the electrode assembly is wound, i.e., in the rotational direction of the winding core used for winding the electrode assembly, based on the longitudinal end portion of the first electrode.

Specifically, stress generated as the cycle progresses is concentrated in a direction of the core cavity due to the rigidity of the battery case, so core deformation may occur in a flat region that is relatively vulnerable to the stress. In this case, in the region above 0° and 180° or less in the opposite direction to the direction in which the electrode assembly is wound, i.e., in the rotational direction R of the winding core, based on the longitudinal end portion of the first electrode, the number of turns of the first electrode up to the outermost layer is relatively smaller and a distance from the longitudinal end portion of the first electrode that can slide is relatively longer, as compared to a region above 180° and 360° or less, so the concentrated stress is not relieved. Therefore, a possibility of deformation in the direction of the core cavity at the corresponding location may be higher.

In addition, the tension applied to the electrode assembly during winding causes distortion of the winding core. Therefore, when the winding core includes a spacing part, the point at which the curvature of the first electrode is greatest and the flat region may occur symmetrically at the spacing part. However, the flat region located in the region above 0° and 180° or less in the rotational direction of the winding core based on the longitudinal end portion of the first electrode is more vulnerable to the core deformation, and the possibility of core deformation may be higher in the flat region even after acceleration cycles.

Therefore, when the angle formed between the longitudinal end portion of the first electrode and the point at which the curvature of the first electrode is greatest is measured in the region above 0° and 180° or less in the opposite direction to the direction in which the electrode assembly is wound based on the longitudinal end portion of the first electrode, the point at which the curvature of the first electrode is greatest can be determined more efficiently, and the effect of reducing the core deformation by the angle adjustment may be more excellent.

When the angle formed between the longitudinal end portion of the first electrode and the point at which the curvature of the first electrode is greatest satisfies the above-described range, it is possible to address the phenomenon that the core cavity fails to maintain a circular shape and collapses due to deformation of the electrode assembly resulting from contraction/expansion of an electrode during charging and discharging of the battery, to prevent damage to the second electrode and the separator, and to prevent an internal short-circuit between the first electrode and the second electrode, so the stability and life characteristics of the battery can be improved.

According to an exemplary embodiment of the present invention, a roundness (circularity) of the first electrode may be 89% or greater at the core part of the electrode assembly. Specifically, at the core part of the electrode assembly, the circularity of the first electrode may be 89% or greater or 90% or greater, and may be 89% or greater and 99% or less, or 90% or greater and 98% or less.

Here, the circularity (%) may be a ratio of the minimum spaced distance between the winding axis and the first electrode based on 100% of the maximum spaced distance between the winding axis and the first electrode. Specifically, the circularity may refer to a ratio (%) of the minimum spaced distance (Rmin) between the winding axis and the first electrode to the maximum spaced distance (Rmax) between the winding axis and the first electrode.

When the above-described circularity range is satisfied, a shape of the electrode assembly can be closer to a circular shape, and resistance to stress acting on the core part may be excellent. Accordingly, it is possible to address the phenomenon that the core cavity fails to maintain a circular shape and collapses due to deformation of an electrode assembly resulting from contraction/expansion of an electrode during charging and discharging of the battery, to prevent damage to the second electrode and the separator, and to prevent an internal short-circuit between the first electrode and the second electrode, so the stability and life characteristics of the battery can be improved.

However, the circularity may be different from the flatness fraction, which refers to the fraction of the region with a curvature equal to or smaller than the reference value in the first electrode, which is a measurement target. For example, there are cases where the circularity satisfies the above-described range but the flatness fraction does not satisfy the above-described range, depending on the shape of the electrode assembly. In this case, by adjusting the flatness fraction, in addition to the circularity, to the above-described range, a case where the shape of the electrode assembly deviates from the circular shape at a specific position can be excluded. Accordingly, compared to the case of simply adjusting the circularity, it may be easier to control the shape of the electrode assembly, and the effect of reducing the core deformation may be more excellent. That is, the flatness fraction may be a more accurate reference for a degree to which the shape of the electrode assembly is 'close to a circular shape'.

According to an exemplary embodiment of the present invention, the first electrode may include a first electrode current collector and a first electrode active material layer provided on at least one surface of the first electrode current collector, and the first electrode current collector and the first electrode active material layer may have longitudinal end portions at the same position. In other words, one end portion, in the longitudinal direction, of the first electrode may be of a free-edge shape.

With this, an area of an unnecessary uncoated portion on the first electrode current collector can be reduced to secure economic efficiency, and a slitting process can be performed after forming an active material layer on an electrode, so that the slitting process and a roll-to-roll process including a winding process can be performed more efficiently.

Here, the description 'same position' means that the end portions in the longitudinal direction are the same, and may include a case where the end portions are formed at substantially the same positions due to a process error that may occur in the slitting process or the like.

According to an exemplary embodiment of the present invention, the first electrode may include a first electrode uncoated portion not provided with a first electrode active material layer, and may further include a first electrode tab provided on the first electrode uncoated portion.

In other words, the first electrode current collector may include a first electrode coated portion where the first electrode active material is coated and a first electrode uncoated portion where the first electrode active material is not coated, and may include a tab on the first electrode uncoated portion. Specifically, the first electrode current collector may include a first electrode uncoated portion and a first electrode tab provided on the first electrode uncoated portion.

That is, one end portion, in the longitudinal direction, of the first electrode may have a free-edge shape, the first electrode uncoated portion may be located between both longitudinal end portions of the first electrode, and the first electrode tab provided on the first electrode uncoated portion may be a middle tab.

According to an exemplary embodiment of the present invention, the first electrode current collector is not particularly limited as long as it has conductivity without inducing a chemical change in the battery. Specifically, for the first electrode current collector, stainless steel, aluminum, nickel, titanium, fired carbon, aluminum or stainless steel each surface-treated with carbon, nickel, titanium, silver, or the like, or the like may be used. That is, the first electrode current collector may be provided in the form of surface-treated stainless steel, an aluminum foil or the like.

In addition, the first electrode current collector may typically have a thickness of 3 to 50 µm, and a surface of the current collector may be formed with microscopic irregularities to enhance adhesive force of the first electrode active material. For example, the first electrode current collector may be used in various forms such as a film, a sheet, a foil, a net, a porous body, a foamed body, and a non-woven fabric body.

According to an exemplary embodiment of the present invention, the first electrode active material may be a first electrode active material that is typically used. Specifically, the first electrode active material may be a layered compound such as a lithium cobalt oxide (LiCoO2) and a lithium nickel oxide (LiNiO2), or a compound substituted with one or more transition metals; a lithium iron oxide such as LiFe3O4; a lithium manganese oxide such as chemical formula Li1+xMn2-xO4 (0≤x≤0.33), LiMnO3, LiMn2O3 and LiMnO2; a lithium copper oxide (Li2CuO2); a vanadium oxide such as LiV3O8, V2O5 and Cu2V2O7; Ni-site type lithium nickel oxide represented by chemical formula LiNi1-yMyO2 (where M is at least one selected from the group consisting of Co, Mn, Al, Cu, Fe, Mg, B, and Ga, and satisfies 0.01≤y≤0.3); a lithium manganese composite oxide represented by chemical formula LiMn2-zMz02 (where M is at least one selected from the group consisting of Co, Ni, Fe, Cr, Zn and Ta, and satisfies 0.01≤z≤0.1) or Li2Mn3MO8 (where M is at least one selected from the group consisting of Fe, Co, Ni, Cu and Zn.); LiMn2O4 in which a part of Li of the chemical formula is substituted with an alkaline earth metal ion, or the like, but is not limited thereto. The first electrode may be Li metal.

According to an exemplary embodiment of the present invention, the first electrode active material layer may further include a first electrode conductive material and a first electrode binder. The first electrode conductive material is used to impart conductivity to the electrode, and can be used without particular limitation as long as it does not cause a chemical change and has electronic conductivity in a battery to be configured. Specific examples of the first electrode conductive material may include graphite such as natural graphite or artificial graphite; a carbon-based material such as carbon black, acetylene black, Ketj en black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

Additionally, the first electrode binder serves to improve adhesion force between particles of the first electrode active material and adhesive force between the first electrode active material and the first electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the second electrode may include a second electrode current collector and a second electrode active material layer provided on the second electrode current collector. Specifically, the second electrode may include a second electrode current collector and a second electrode active material layer formed on one surface or both surfaces of the second electrode current collector and including a second electrode active material. In other words, the second electrode active material layer may be formed on a second electrode coated portion of the second electrode current collector, and a surface not provided with the second electrode active material layer may be expressed as a second electrode uncoated portion.

According to an exemplary embodiment of the present invention, the second electrode current collector may include a second electrode coated portion where the second electrode active material layer is formed and a second electrode uncoated portion where the second electrode active material layer is not formed, and may include a tab on the second electrode uncoated portion. Specifically, the second electrode current collector may include a second electrode uncoated portion and a second electrode tab formed on the second electrode uncoated portion. Accordingly, the manufactured electrode assembly may include one or more second electrode tabs.

According to an exemplary embodiment of the present invention, the second electrode active material layer may include a second electrode active material including one or more selected from the group consisting of a silicon-based material and a carbon-based material. In addition, the second electrode active material layer may further include a second electrode conductive material and a second electrode binder, and for the second electrode active material, the second electrode conductive material, and the second electrode binder, materials that are used in the art may be used without limitation.

According to an exemplary embodiment of the present invention, the second electrode current collector is not particularly limited as long as it has conductivity without inducing a chemical change in the battery. For example, for the second electrode current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the second electrode current collector. A thickness of the second electrode current collector may be 5 µm or greater and 30 µm or less. However, the thickness of the second electrode current collector is not limited thereto.

According to an exemplary embodiment of the present invention, the second electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

According to an exemplary embodiment of the present invention, the second electrode conductive material is not particularly limited as long as it has conductivity without inducing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the electrode assembly may include a plurality of separators. For example, the electrode assembly may have a structure where a separator/a second electrode/a separator/a first electrode are sequentially stacked. The separator serves to separate the first electrode and the second electrode and to provide a migration path of lithium ions, and any separator may be used without particular limitation as long as it is usually used as a separator in a secondary battery, and particularly, a separator having high moisture-retention ability for an electrolyte as well as a low resistance to migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric formed of high melting point glass fibers, polyethylene terephthalate fibers, or the like may be used. In addition, as the separator, a separator in which the above-described separator material is used as a base layer and a slurry containing a ceramic component or a polymer material in order to secure heat resistance or mechanical strength is coated on the base layer may be used. The separator having a single layer or multilayer structure may be selectively used. A thickness of the separator may be 5 µm or greater and 20 µm or less. However, the thickness of the separator is not limited thereto.

According to an exemplary embodiment of the present invention, the angle formed between the first electrode and the second electrode may be 25° or less. Specifically, the first electrode may include a first surface in a direction of the winding axis of the electrode assembly and a second surface opposite to the first surface, and a first extension line drawn by extending a straight line connecting two points where a direction of curvature changes at a spaced distance of 5 mm from the longitudinal end portion of the first electrode on the first surface of the first electrode and a second extension line drawn by extending a straight line connecting two points at a spaced distance of 5 mm from the longitudinal end portion of the first electrode on a surface of the second electrode facing the first surface of the first electrode may form an angle of 25° or less. In this case, the angle formed by the first electrode and the second electrode may be measured, for example, after additional charging and discharging 200 times or more at 40°C or higher after activation.

When the above-described angle range is satisfied, the end portion of the first electrode located at the core part and the second electrode adjacent thereto are not deformed beyond a certain level, so a phenomenon that the separator located between the first electrode and the second electrode is damaged and the first electrode and the second electrode come into direct contact with each other, that is, core impingement, can be suppressed. With this, damage to the second electrode and the separator can be prevented and an internal short-circuit between the first electrode and the second electrode can be prevented, so the stability and life characteristics of the battery can be improved.

According to an exemplary embodiment of the present invention, the first electrode and second electrode may be a positive electrode and a negative electrode, respectively. Specifically, the first electrode may be a positive electrode, and the second electrode may be a negative electrode.

An exemplary embodiment of the present invention provides a secondary battery including the electrode assembly described above, and a battery case for accommodating the electrode assembly. Specifically, the secondary battery may include the electrode assembly according to an exemplary embodiment described above and a battery case for accommodating the electrode assembly.

The secondary battery according to the present invention can address the phenomenon that the core cavity fails to maintain a circular shape and collapses due to deformation of an electrode assembly resulting from contraction/expansion of an electrode during charging and discharging of the battery, prevent damage to the second electrode and the separator, and prevent an internal short-circuit between the first electrode and the second electrode, so the stability and life characteristics of the battery can be improved.

According to an exemplary embodiment of the present invention, the battery case may have a cylindrical shape. Specifically, the battery case may have a cylindrical shape, a square shape, a pouch shaped or the like depending on uses, but is not limited thereto.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F-, Cl-, I-, NO3-, N(CN)2-, BF4-, ClO4-, PF6-, (CF3)2PF4-, (CF3)3PF3-, (CF3)4PF2-, (CF3)5PF-, (CF3)6P-, CF3SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN- and (CF3CF2SO2)2N- may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the battery module. Since the battery module and the battery pack include the secondary battery with high capacity, high battery stability and high life characteristics, the battery module and the battery pack may be used as a power source of a medium and large sized device selected from the group consisting of an electric vehicle, a hybrid electric vehicle, a plug-in hybrid electric vehicle, and a power storage system.

Below, Examples will be described in detail to specifically describe the present invention. However, the Examples according to the present invention maybe modified in other forms, and the scope of the present invention is not construed as being limited to the following Examples. The Examples of the present specification are provided to more completely explain the present invention to one skilled in the art.

### Examples

### Example 1

### Preparation of Electrode Assembly

A first electrode active material slurry was prepared by adding Li(Ni0.89Co0.07Mn0.04)O2 as a first electrode active material, CNT as a first electrode conductive material, and polyvinylidene fluoride (PVdF) as a first electrode binder to N-methyl-2-pyrrolidone (NMP) at a weight ratio of 97.92:0.5:1.58. The first electrode active material slurry was coated on an aluminum current collector with a thickness of 15 µm and a length of 63.9 mm in a width direction, followed by drying and rolling to form a first electrode active material layer, whereby a first electrode with a thickness of 135 µm was prepared.

Next, a second electrode active material composition was prepared by preparing natural graphite (C, average particle diameter: 17 µm) as a second electrode active material, and mixing the second electrode active material, carbon black as a second electrode conductive material, and styrene-butadiene rubber (SBR) as a second electrode binder at a weight ratio of 97.7: 1.3:1.0. Then, 7.8 g of distilled water was added to 5 g of the second electrode active material composition, followed by stirring to prepare a second electrode active material slurry. The second electrode active material slurry was coated on a copper (Cu) metal thin film as a second electrode current collector with a thickness of 8 µm and a length of 65.2 mm in a width direction, followed by drying (drying temperature 120°C, 1 minute) to form a second electrode with a thickness of 166 µm. In this case, the temperature of the circulating air was 6o°C.

Thereafter, two separators were sequentially arranged and wound using a winding core with a diameter of 3.2 mm, and then the second electrode was input between the two separators, which was then additionally wound. In this case, the winding core including a spacing part where a separator is inserted, a first winding core part, and a second winding core part having a cross-sectional area different from that of the first winding core part was used, and the cross-sectional areas of the first and second winding core parts were 15 mm2 and 10 mm2, respectively.

After the separators and the second electrode were wound about three turns, the first electrode was input and wound, and a seal tape made of PET was attached and finished to wrap around the upper and lower outer peripheral surfaces of the electrode assembly at the end portion where the winding was completed.

In this case, based on the first winding core part located at a 6 o'clock direction and the second winding core part located at a 12 o'clock direction of the electrode assembly, the positions of the longitudinal end portions located at the core part and outermost portion of the first electrode and the position of the tab were adjusted as shown in Table 1 below. Here, FE (Free-edge) means that the electrode current collector and the electrode active material layer have longitudinal end portions at the same position, and the unit 'o'clock' means that when the first electrode tab is located at 12 o'clock on the CT image, the relative position of each factor is shown clockwise.

The area and circularity of the core cavity measured from computed tomography (CT) images are shown in Table 1 below. In this case, as regards the angle formed between the longitudinal end portion of the first electrode and the point at which the curvature of the first electrode is greatest, the curvatures measured at each measurement point on the CT image were compared, the measurement point, at which the curvature has the greatest value in the region above 0° and 180° or less in the opposite direction to the direction in which the electrode assembly is wound, based on the longitudinal end portion of the first electrode, was determined as the point (curvature Max.) at which the curvature of the first electrode is greatest, and the angle formed between the point at which the curvature of the first electrode is greatest and the longitudinal end portion of the first electrode was measured around the winding axis and shown in Table 2 below. In the following Examples, Comparative Examples, and Experimental Examples, the point (curvature Max.) at which the curvature of the first electrode is greatest was measured using the same method.

**[Table 1]**

| Influencing factor | Adjusting range |
|---|---|
| FE position at core part of first electrode (o'clock) | 6.5-8 |
| FE position at outermost portion of first electrode (o'clock) | 4.5-5.5 |
| Tab position at outermost second electrode (o'clock) | 6-7 |
| Area of core cavity (mm²) | 27-33 |
| Circularity (%) | 89-92 |

### Preparation of Secondary Battery

A secondary battery was prepared by inserting the electrode assembly into a cylindrical battery case, injecting an electrolyte solution in which ethylene carbonate (EC), ethyl methyl carbonate (EMC), and diethyl carbonate (DEC) were mixed at a volume ratio of 20:5:75 and LiPF6 was dissolved therein to be 1.4 M, and sealing the cylindrical battery case with a cap assembly.

In this case, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 60.8°, and the flatness fraction of the first electrode was 7.72%.

### Example 2

An electrode assembly and a secondary battery were manufactured in the same manner as in Example 1, except that the length of the separator wound and the position of the first electrode when inputting the first electrode were adjusted so that, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 65° and the flatness fraction of the first electrode was 9.6%.

### Comparative Example 1

An electrode assembly and a secondary battery were manufactured in the same manner as in Example 1, except that the length of the separator wound and the position of the first electrode when inputting the first electrode were adjusted so that, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 98.9° and the flatness fraction of the first electrode was 13.9%.

### Comparative Example 2

An electrode assembly and a secondary battery were manufactured in the same manner as in Example 1, except that the length of the separator wound and the position of the first electrode when inputting the first electrode were adjusted so that, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 112.4° and the flatness fraction of the first electrode was 17.0%.

### Comparative Example 3

An electrode assembly and a secondary battery were manufactured in the same manner as in Example 1, except that the length of the separator wound and the position of the first electrode when inputting the first electrode were adjusted so that, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 129.3° and the flatness fraction of the first electrode was 16.49%.

### Comparative Example 4

An electrode assembly and a secondary battery were manufactured in the same manner as in Example 1, except that the length of the separator wound and the position of the first electrode when inputting the first electrode were adjusted so that, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 40° and the flatness fraction of the first electrode was 3.0%.

### Comparative Example 5

An electrode assembly and a secondary battery were manufactured in the same manner as in Example 1, except that the length of the separator wound and the position of the first electrode when inputting the first electrode were adjusted so that, after 50 cycles under conditions of 4.25 V-2.5 V 1 C/1 C @25°C, the angle between the longitudinal end portion of the first electrode extracted from the CT image of the core part and the point at which the curvature of the first electrode is greatest was 20° and the flatness fraction of the first electrode was 1.0%.

### Experimental Examples

### Experimental Example 1: Flatness Fraction Evaluation

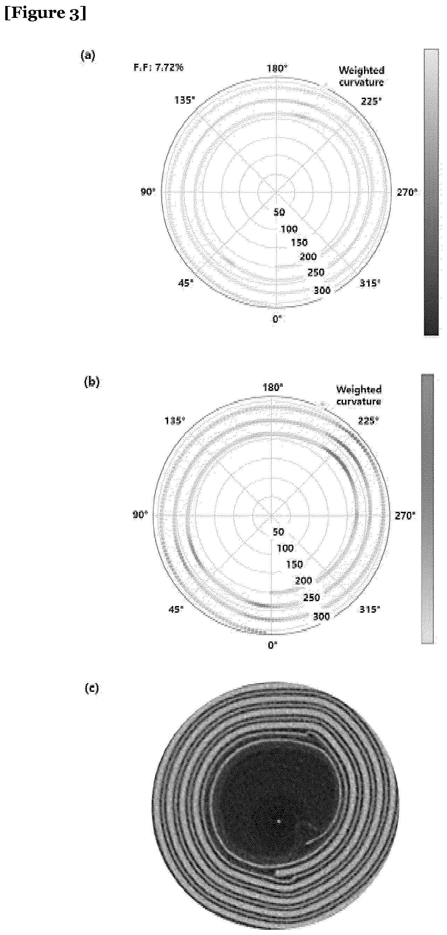

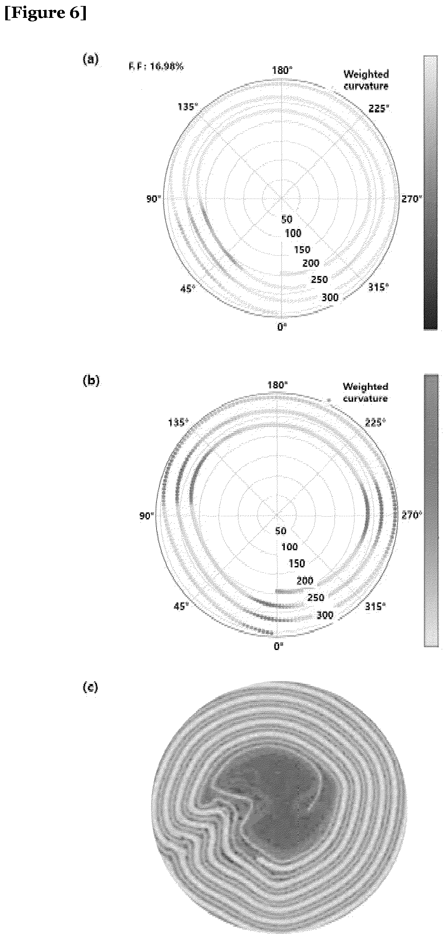

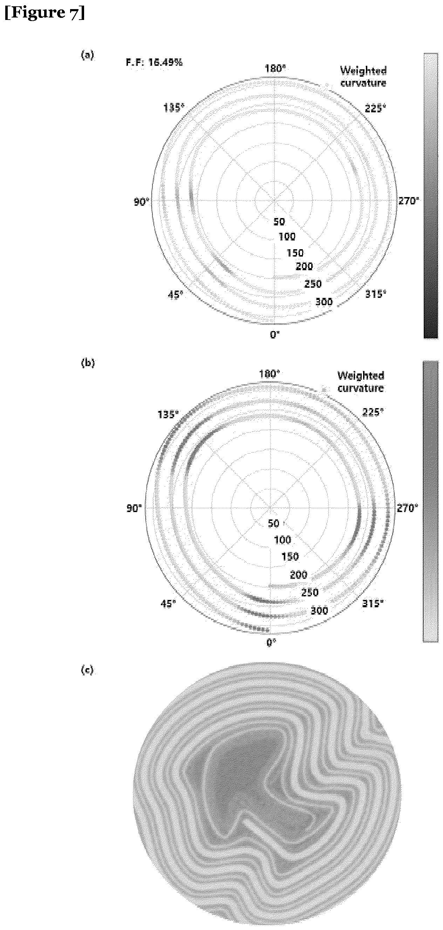

The flatness fractions of the secondary batteries Examples 1 and 2 and Comparative Examples 1 to 5 were evaluated by the following method, and the results are shown in Table 2 below and FIGS. 3 to 9, respectively.
1) The first electrode is extracted from the CT image of the electrode assembly.
2) On the first surface of the first electrode, measurement points are set at 2° intervals from one end portion, in the longitudinal direction, of the first electrode, and the x-coordinates and y-coordinates of the measurement points are measured.
3) The curvature (k) for each measurement point is calculated according to Formula 1 below using the x-coordinate and y-coordinate of the measurement point.

   [Formula 1] k=(x'y"-y'x")/(x'2+y'2)3/2

In Formula 1 above, k is a curvature of the first electrode, x is an x-coordinate of the measurement point, y is a y-coordinate of the measurement point, x' is a first derivative value of x, and y' is a first derivative value of y, x" is a second derivative value of x, and y" is a second derivative value of y.

4) When the curvature value calculated at each measurement point is 1 or less, the corresponding measurement point is evaluated as a flat region, and a ratio of the number of measurement points evaluated as a flat region based on 100% of the total number of measurement points was evaluated as flatness fraction (%).

### Experimental Example 2: Core Collapse Evaluation

The occurrence or not of core collapse in the secondary batteries of Examples 1 and 2, and Comparative Examples 1 to 5 was evaluated by the following method, and the occurrence or not of core collapse was re-evaluated every 200 cycles. The results are shown in Table 2 below and FIGS. 3 to 9, respectively.
1) The first electrode is extracted from the CT image of the electrode assembly.
2-1) An area of the core cavity surrounded by the first electrode from one end portion, in the longitudinal direction, of the first electrode to a point corresponding to one turn in the longitudinal direction of the first electrode is measured.
2-2) When the area of the core cavity is less than 100% based on 100% of a sum of the cross-sectional areas of the spacing part, first winding core part, and second winding core part of the winding core used for winding the electrode assembly, the core collapse was evaluated as having occurred.
3-1) On the first surface of the first electrode, an extension line of the straight line corresponding to the minimum value (Dmin) and maximum value (Dmax) of the diameter of the core cavity of the extracted first electrode is drawn, and a concentric circle is drawn using the intersection of each straight line as the central axis, that is, the winding axis.
3-2) The maximum spaced distance (Rmax) between the winding axis and the first electrode and the minimum spaced distance (Rmin) between the winding axis and the first electrode from one end portion, in the longitudinal direction, of the first electrode to a point corresponding to one turn in the longitudinal direction of the first electrode are measured, respectively.
3-3) A ratio (%) of the minimum spaced distance (Rmin) between the winding axis and the first electrode to the maximum spaced distance (Rmax) between the winding axis and the first electrode, that is, the circularity of the core cavity, is calculated. When the calculated circularity of the core cavity was less than 89%, the core collapse was evaluated as having occurred.

On the other hand, in the case where an unknown secondary battery (unknown cell) is acquired, the above method for evaluating whether the core collapse has occurred may be applied in a manner of evaluating whether the core collapse has occurred at the time of initial acquisition, re-evaluating whether the core collapse has occurred every 200 cycles, and comparing and analyzing the result with the core collapse conditions of the secondary battery of the exemplary embodiment according to the present invention.

### Experimental Example 3: Core Impingement Evaluation

The occurrence or not of core impingement in the secondary batteries Examples 1 and 2, and Comparative Examples 1 to 5 was evaluated by the following method, and the occurrence or not of core impingement was re-evaluated every 200 cycles, and the results are shown in Table 2 below and FIGS. 3 to 9, respectively.

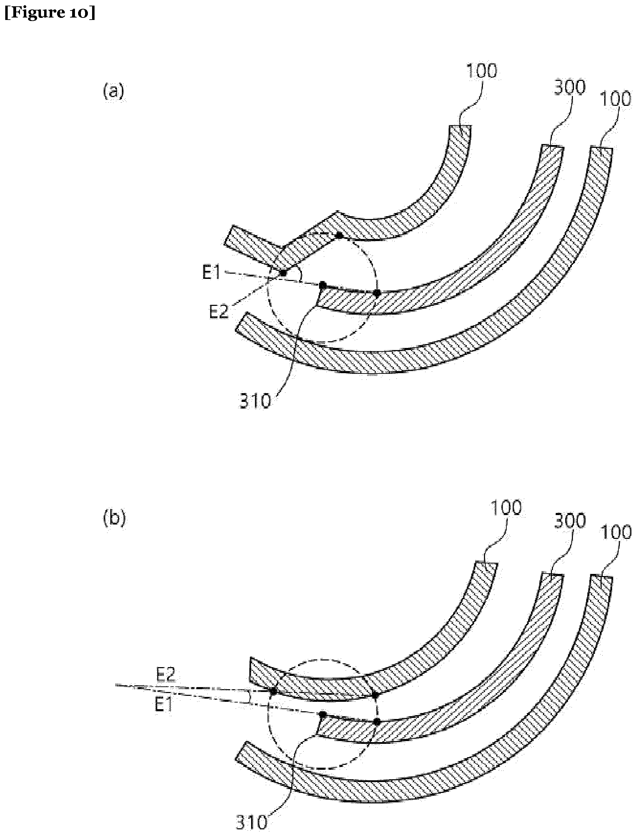

FIG. 10 schematically shows a method for evaluating whether the core impingement has occurred. Specifically, FIG. 10(a) schematically shows a method for evaluating whether the core impingement has occurred when deformation occurred in the second electrode, and FIG. 10(b) schematically shows a method for evaluating whether the core impingement has occurred when deformation did not occur in the second electrode.
1) On a first surface of a first electrode 300, a first extension line E1 is drawn by extending a straight line connecting a longitudinal end portion 310 of the first electrode and a point 5 mm spaced apart from the end portion.
2-1) When the second electrode is deformed

At the core part of the electrode assembly, on a surface of a second electrode 100 facing the first surface of the first electrode, a second extension line E2 is drawn by extending a straight line connecting two points where a direction of curvature changes within a spaced distance of 5 mm from the longitudinal end portion 310 of the first electrode.

2-2) When there is no deformation in the second electrode

At the core part of the electrode assembly, on the surface of the second electrode 100 facing the first surface of the first electrode, a second extension line E2 is drawn by extending a straight line connecting two points 5 mm spaced apart from the longitudinal end portion 310 of the first electrode.

3) When an angle from the first extension line E1 to the second extension line E2 in a counterclockwise direction with respect to the intersection of the first extension line E1 and the second extension line E2 exceeded 25°, it was evaluated that the core impingement occurred.

On the other hand, in the case where an unknown secondary battery (unknown cell) is acquired, the above method for evaluating whether the core impingement has occurred may be applied in a manner of evaluating whether the core impingement has occurred at the time of initial acquisition, reevaluating whether the core impingement has occurred every 200 cycles, and comparing and analyzing the result with the core impingement conditions of the secondary battery of the exemplary embodiment according to the present invention.

### Experimental Example 4: Evaluation of occurrence of core crack

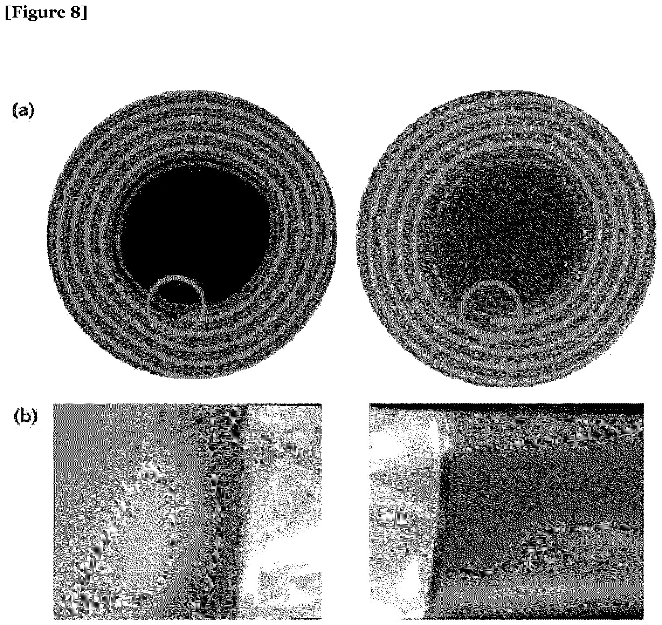

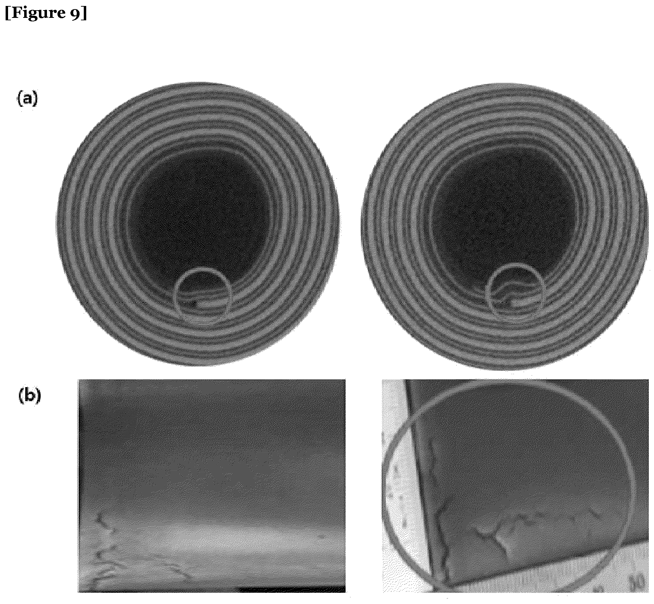

The occurrence or not of core crack was evaluated for the electrode assemblies of Example 1, Example 2, and Comparative Examples 1 to 5 by the following method, and the results are shown in Table 2 below and FIGS. 8 and 9, respectively.

Specifically, the electrode assemblies of Examples 1 and 2, and Comparative Examples 1 to 5 were prepared, and the manufactured electrode assemblies were disassembled to visually check whether cracks or wrinkles occurred at the core part. In this case, when cracks or wrinkles were included at the core part, the core crack was evaluated as having occurred.

**[Table 2]**

| | First electrode F.E.-curvature Max. angle (°) | Flatness fraction (%) | Results of core collapse evaluation | Results of core impingement evaluation | Results of core crack occurrence evaluation |
|---|---|---|---|---|---|
| Example 1 | 60.8 | 7.72 | 0/2 | 0/2 | 0/2 |
| Example 2 | 65 | 9.6 | 0/2 | 0/2 | 0/2 |
| Comparative Example 1 | 98.9 | 13.9 | 2/2 | 0/2 | 0/2 |
| Comparative Example 2 | 112. 4 | 17.0 | 2/2 | 1/2 | 0/2 |
| Comparative Example 3 | 129.3 | 16-49 | 2/2 | 1/2 | 0/2 |
| Comparative Example 4 | 40 | 3.0 | 1/2 | 1/2 | 1/2 |
| Comparative Example 5 | 20 | 1.0 | 1/2 | 1/2 | 1/2 |

FIG. 8 is a CT image of an electrode assembly according to Comparative Example 4 and an image showing occurrence of a core crack of a first electrode, and FIG. 9 is a CT image of an electrode assembly according to Comparative Example 5 and an image showing occurrence of a core crack of a first electrode.

Specifically, FIGS. 8(a) and 9(a) are CT images of the electrode assemblies according to Comparative Example 4 and Comparative Example 5, and FIGS. 8(b) and 9(b) are exploded images showing cracks having occurred in the first electrodes at the core parts of the electrode assembly according to Comparative Example 4 and the electrode assembly according to Comparative Example 5. Here, the red circles represent the core impingement occurrence region corresponding to the longitudinal end portion of the first electrode and the crack occurrence region of the first electrode at the core part, respectively.

Referring to Table 2 and FIGS. 8(b) and 9(b), in the case of the electrode assemblies according to Comparative Examples 4 and 5, it can be seen that, at the core part of the electrode assembly, the flatness fraction of the first electrode was 3% or less, so the stress generated by the distortion of the winding core was concentrated on the longitudinal end portion of the first electrode, causing wrinkles or cracks in the core part.

If cracks and resulting foreign matters occur in the first electrode at the core part of the electrode assembly during the winding process, the defect rate may increase and the processability may deteriorate. Accordingly, by excluding the input of the first electrode where cracks are expected to occur in the manufacturing process, it is possible to prevent a decrease in productivity of the electrode assembly and secondary battery.

Specifically, when a cracked electrode assembly is inserted into the battery case, the possibility of occurrence of low voltage and short-circuit due to foreign matters in the first electrode greatly increases in the battery case. Accordingly, the possibility of the occurrence of cracks in the first electrode may be reduced by adjusting the flatness fraction of the first electrode in the winding process. That is, it can be seen that the electrode assembly and the method for manufacturing an electrode assembly according to an exemplary embodiment of the present invention are suitable for a continuous process using roll-to-roll process equipment in the related art, ensuring productivity and economic efficiency of the electrode assembly including the first electrode and the secondary battery.

### Reference Experimental Example: Electrode Sliding Range Evaluation

### Reference Experimental Example 1

The secondary battery of Example 1 was prepared, and charged and discharged 50 times under conditions of 25°C, 1C charge and 1C discharge.

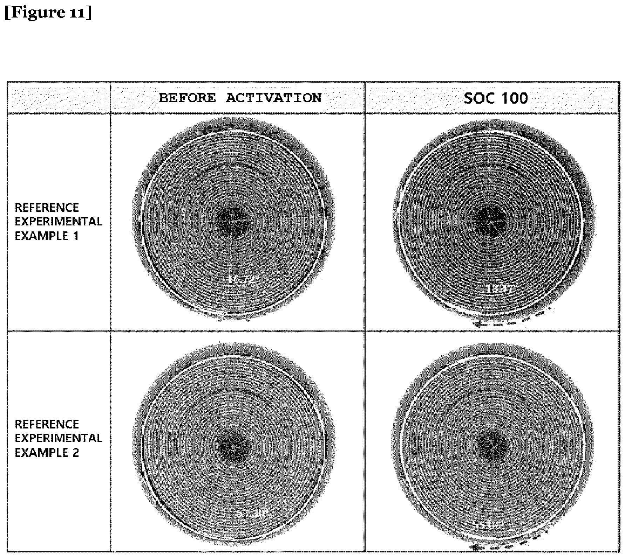

While performing 200 cycles from SOC of 0% to SOC of 100% under conditions of 4.25 V-2.5 V 1 C/1 C @25°C, the position of the longitudinal end portion of the first electrode at SOC of o% and SOC of 100% was extracted from the CT image and recorded, and a sliding range of the longitudinal end portion of the first electrode was measured. Thereafter, the sliding range of the longitudinal end portion of the first electrode was evaluated from CT images before activation and at SOC of 100%, and is shown in FIG. 11.

### Reference Experimental Example 2

The sliding range of the longitudinal end portion of the first electrode was measured in the same manner as in Reference Experimental Example 1, except that the secondary battery of Example 2 was used. Thereafter, the sliding range of the longitudinal end portion of the first electrode was evaluated from CT images before activation and at SOC of 100%, and is shown in FIG. 11.

FIG. 11 is CT images showing sliding ranges of longitudinal end portions of first electrodes of secondary batteries according to Reference Experimental Example 1 and Reference Experimental Example 2. Specifically, FIG. 11 is CT images before activation and at SOC of 100% of the secondary batteries according to Reference Experimental Example 1 and Reference Experimental Example 2, and images showing the sliding range of the longitudinal end portion of the first electrode. More specifically, FIG. 11 shows sliding ranges by comparing the positions of the longitudinal end portions of the first electrode before activation of the secondary battery and at SOC 100%, based on the second electrode tab located at the outermost portion.

Referring to FIG. 11, it was confirmed that in Reference Experimental Example 1, sliding of 1.69° (= 18.41° (SOC 100) - 16.72° (before activation)) occurred and in Reference Experimental Example 2, sliding of 1.78° (= 55.08° (SOC 100) - 53.30° (before activation)) occurred. That is, as a result of measurements in both Reference Experimental Example 1 and Reference Experimental Example 2, it was confirmed that the longitudinal end portion of the first electrode slid within the range of 1° to 3° relative to the initial position.

With this, it can be seen that in the secondary batteries according to Examples 1 and 2, sliding of the first electrode may occur due to contraction/expansion of the electrode before activation and at SOC 100%, but the sliding occurs within a specific range (1° to 3°).

That is, the winding process is performed while maintaining tension of a specific value or higher, so the position of the point at which the curvature of the first electrode is greatest is maintained constant. Therefore, it can be seen that, even when the cycle progresses, the range of the angle formed between the longitudinal end portion of the first electrode and the point at which the curvature of the first electrode is greatest is maintained within the sliding range (1° to 3°) of the longitudinal end portion of the first electrode.

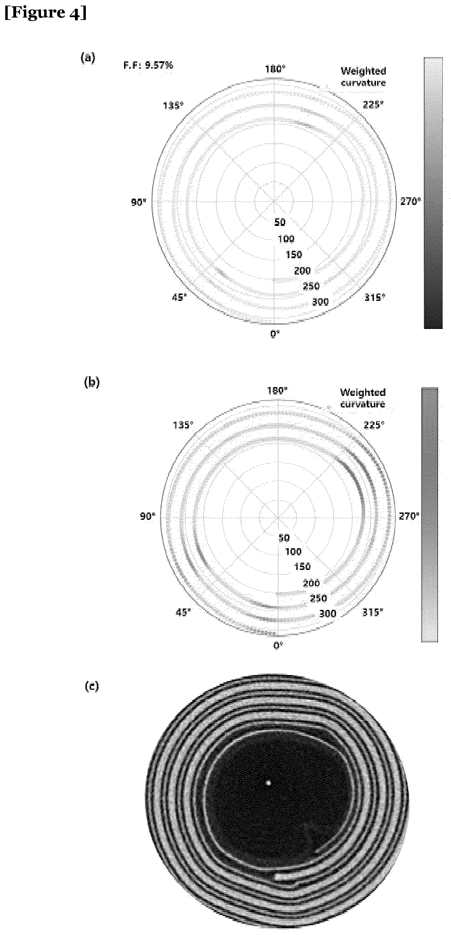

FIGS. 3 and 4 are images showing CT images of the electrode assemblies according to Examples 1 and 2 and the curvatures of the first electrodes extracted from the CT images.

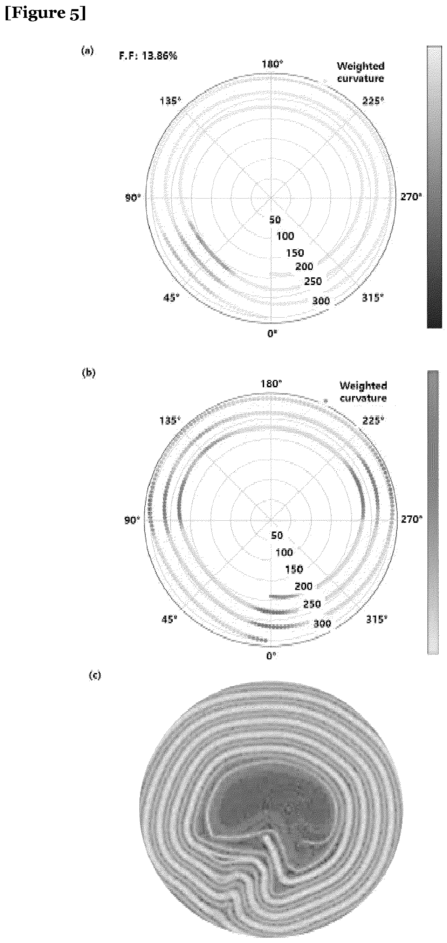

FIGS. 5 to 7 are images showing CT images of electrode assemblies according to Comparative Examples 1 to 3 and the curvatures of the first electrodes extracted from the CT images.

Specifically, FIGS. 3 to 7 express, in color coordinates, a ratio occupied by measurement points having a curvature equal to or less than an arbitrarily set reference value with respect to the curvature measured at each measurement point. Here, the set reference value is a specific value within a range of 0.5 to 1.0, and the range of the color index expressed on the right side of the color coordinates is 0 to 0.8 in (a) of FIGS. 3 to 7, and 1 to 1.5 in (b) of FIGS. 3 to 7.

More specifically, in (a) of FIGS. 3 to 7, when the color distribution range of the curvature measured at each measurement point is set to 0 to 0.8, a portion where regions with low k values are distributed is implemented as color coordinates to visually express a flat region and a flatness fraction, and in (b) of FIGS. 3 to 7, when the color distribution range of the curvature measured at each measurement point is set to 1 to 1.5, a portion where regions with high k values are distributed is implemented as color coordinates to visually express a point at which the curvature is greatest. In this case, each measurement point was extracted from the CT image of the first electrode as described above, and it can be confirmed that the longitudinal end portion of the first electrode located at the core part is located in the 6 o'clock direction.

Referring to Table 2, and FIGS. 3 to 7, FIG. 8(a), and FIG. 9(a), in the case of the electrode assemblies according to Example 1 and Example 2, after 50 cycles under conditions of 4.25 V-2.5 V 1 C/1 C @25°C, the flatness fractions of the first electrodes extracted from the CT images of the core part were 7.72% and 9.6%, respectively, and it was confirmed that the core collapse and the core impingement did not occur even after 500 cycles under conditions of 4.2 V (0.25 C)-2.85 V (0.33 C) @40°C.

On the other hand, as in Comparative Examples 1 to 3, when the flatness fraction of the first electrode extracted from the CT image of the core part was greater than 10%, or as in Comparative Examples 4 and 5, when the flatness fraction of the first electrode extracted from the CT image of the core part was 3% or less, i.e., when the above-described range of the flatness fraction was not satisfied, it was confirmed that the angle formed between the first extension line and the second extension line was 25° or greater and the core impingement occurred, or even when the core impingement did not occur, the core collapse occurred because the area of the core cavity was less than 100% based on 100% of the sum of the cross-sectional areas of the winding core used for winding or the circularity of the core cavity was less than 89%.

With this, it can be seen that the electrode assembly and the secondary battery including the same according to an exemplary embodiment of the present invention adjust the flatness fraction of the first electrode extracted from the CT image of the core part to a specific range, making it possible to address the phenomenon that the core cavity fails to maintain a circular shape and collapses due to deformation of an electrode assembly resulting from contraction/expansion of an electrode during charging and discharging of the battery, to prevent damage to the second electrode and the separator, and to prevent an internal short-circuit between the first electrode and the second electrode, so the stability and life characteristics of the battery can be improved.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified within the scope of the concept of the invention disclosed in the present specification, within the scope equivalent to the above disclosure and/or within the scope of skill or knowledge in the art. Accordingly, the foregoing detailed description of the invention is not intended to limit the invention to the disclosed embodiments. Furthermore, the appended claims should be construed to include other embodiments as well.

### EXPLANATION OF REFERENCE NUMERALS AND SYMBOLS

100: second electrode
300: first electrode
310: longitudinal end portion of first electrode
E1: first extension line
E2: second extension line
A: first winding core part
B: second winding core part

## Claims

1. An electrode assembly comprising a first electrode, a separator, and a second electrode that are stacked and wound around a winding axis,
wherein the first electrode has a first surface facing the winding axis and a second surface opposite to the first surface, and
wherein a flatness fraction of the first electrode is greater than 3% and 13.5% or less in or at a core part of the electrode assembly.

2. The electrode assembly of claim 1,
wherein the core part is a part of the electrode assembly region within 3 turns from an inner end of the first electrode.

3. The electrode assembly of claim 1 or 2,
wherein the first electrode comprises a first electrode current collector, and a first electrode active material layer provided on at least one surface of the first electrode current collector such that the first electrode active material layer extends to an inner end of the first electrode current collector, and the inner end of the first current collector corresponds to the inner end of the first electrode.

4. The electrode assembly of claim 3,
wherein the first electrode comprises a first electrode uncoated portion in which the first electrode active material layer is not provided, and
wherein the electrode assembly further comprises a first electrode tab physically connected to or formed on the first electrode uncoated portion.

5. The electrode assembly of any of the preceding claims,
wherein an angle formed between a line extending from the winding axis through the inner end of the first electrode and a line extending from the winding axis through a point at which curvature of the first electrode is 1 or less is greater than o°.

6. The electrode assembly of any of the preceding claims,
wherein the flatness fraction of the first electrode is determined after activation of the electrode assembly.

7. The electrode assembly of any of the preceding claims,
wherein the flatness fraction of the first electrode is determined after charging and discharging 50 times under conditions of 25°C, 1 C charge, and 1 C discharge.

8. The electrode assembly of any of the preceding claims,
wherein an angle formed between a line extending from the winding axis and through an inner end of the first electrode and a line extending from the winding axis and through a curvature maximum point is between 40° and 98° .

9. The electrode assembly of claim 8,
wherein the curvature maximum point is a point at which the curvature of the first electrode is maximum in a region in a cross-section of the electrode assembly perpendicular to the winding axis, the region extending from the inner end of the first electrode over an azimuth angle of 0° to 180° in a winding direction in which the electrode assembly is wound.

10. The electrode assembly of any of the preceding claims,
wherein a circularity of the first electrode is 89% or greater in or at the core part.

11. The electrode assembly of any of the preceding claims,
wherein a first extension line is drawn by extending a straight line connecting two points where a direction of curvature changes within a distance of 5 mm from the inner end of the first electrode on the first surface of the first electrode,
wherein a second extension line is drawn by extending a straight line connecting two points within a distance of 5 mm from the inner end of the first electrode on a surface of the second electrode facing the first surface of the first electrode,
wherein the first extension line and the second extension line form an angle of 25° or less.

12. The electrode assembly of claim 1, wherein the first electrode does not comprise a crack or a wrinkle in or at the core part of the electrode assembly.

13. A secondary battery comprising:
the electrode assembly according to any one of the preceding claims.

14. The secondary battery of claim 13, further comprising a battery case, particularly a cylindrical battery case, in which the electrode assembly is accommodated.
